# EUROPEAN PATENT APPLICATION

(11) **EP 4 604 299 A1**
(43) Date of publication of application: **20.08.2025**
(21) Application number: 23927914.4
(22) Date of filing: 17.03.2023
(51) Int. Cl.: H01M 50/449

(54) **SEPARATOR, SECONDARY BATTERY, AND ELECTRICAL DEVICE**

(71) Applicant: Contemporary Amperex Technology (Hong Kong) Limited, Central (HK)
(72) Inventor: WANG, Zhaoguang, Ningde, Fujian 352100 (CN); YANG, Jianrui, Ningde, Fujian 352100 (CN); OUYANG, Chuying, Ningde, Fujian 352100 (CN); SUN, Chengdong, Ningde, Fujian 352100 (CN); HUANG, Siying, Ningde, Fujian 352100 (CN); MU, Xueying, Ningde, Fujian 352100 (CN); LI, Quan, Ningde, Fujian 352100 (CN); HAN, Chongwang, Ningde, Fujian 352100 (CN)
(74) Representative: Ran, Handong
(86) International application number: PCT/CN2023/082338
(87) International publication number: WO 2024/192595

(57) **Abstract**

The present application provides a separator, comprising: a first base membrane and a second base membrane. The melting point of the second base membrane is less than that of the first base membrane; the transverse elongation at break of the second base membrane is greater than the longitudinal elongation at break of the second base membrane, and the longitudinal elongation at break of the second base membrane is less than 100%. According to the separator provided in the present application, the nail piercing performance of the separator can be effectively improved, and metal dendrites are prevented from penetrating the separator to cause a short circuit, thereby improving the reliability of the secondary battery.

## Description

### TECHNICAL FIELD

The present application belongs to the technical field of secondary batteries, and specifically to a separator, a secondary battery, and an electrical apparatus.

### BACKGROUND

Secondary batteries are widely used in various consumer electronic products and electric vehicles due to their outstanding characteristics of light weight, no pollution and memoryless effect. With the continuous development of new energy industry, increasingly higher use demands have been put forward by users for the reliability of secondary batteries.

Therefore, it is an urgent problem to be solved currently to provide a secondary battery with better reliability.

### SUMMARY OF THE INVENTION

In view of the technical problems existing in the background technology, the present application provides a separator, a secondary battery and an electrical apparatus, aiming to improve the reliability of the secondary battery.

In order to achieve the above-mentioned objective, a first aspect of the present application provides a separator including: a first base film and a second base film, a melting point of the second base film being lower than a melting point of the first base film; a transverse elongation at break of the second base film being greater than a longitudinal elongation at break of the second base film, and the longitudinal elongation at break of the second base film being less than 100%.

Compared with the prior art, the present application has at least the following beneficial effects. In the separator provided in the present application, the melting point of the first base film is higher than the melting point of the second base film, which can improve the heat resistance of the separator. By setting the transverse elongation at break of the second base film to be greater than the longitudinal elongation at break of the second base film, and the longitudinal elongation at break of the second base film to be less than 100%, the nail penetration performance of the separator can be effectively improved to prevent metal dendrites from penetrating the separator and causing a short circuit, thereby improving the reliability of the secondary battery.

In any embodiment of the present application, a ratio of the transverse elongation at break of the second base film to the longitudinal elongation at break of the second base film ranges from 1.05 to 4.5, and optionally from 1.2 to 3.0, which can effectively improve the nail penetration performance of the separator and prevent metal dendrites from penetrating the separator and causing a short circuit, thereby improving the reliability of the secondary battery.

In any embodiment of the present application, the longitudinal elongation at break of the second base film ranges from 30% to 90%, which can effectively improve the nail penetration performance of the separator and prevent metal dendrites from penetrating the separator and causing a short circuit, thereby improving the reliability of the secondary battery.

In any embodiment of the present application, a transverse elongation at break of the first base film is less than a longitudinal elongation at break of the first base film, which can effectively improve the nail penetration performance of the separator and prevent metal dendrites from penetrating the separator and causing a short circuit, thereby improving the reliability of the secondary battery.

In any embodiment of the present application, a ratio of the transverse elongation at break of the first base film to the longitudinal elongation at break of the first base film ranges from 0.05 to 0.5, and optionally from 0.1 to 0.3, which can effectively improve the nail penetration performance of the separator and prevent metal dendrites from penetrating the separator and causing a short circuit, thereby improving the reliability of the secondary battery.

In any embodiment of the present application, the separator satisfies at least one of the following conditions (1) to (3):
(1) the transverse elongation at break of the first base film ranges from 30% to 250%, and optionally from 40% to 200%;
(2) the longitudinal elongation at break of the first base film ranges from 40% to 1000%, and optionally from 400% to 800%; and
(3) the transverse elongation at break of the second base film ranges from 50% to 250%, and optionally from 100% to 180%.

When the separator is within the range given in at least one of the above conditions (1) to (3), the nail penetration performance of the separator can be effectively improved and metal dendrites can be prevented from penetrating the separator and causing a short circuit, thereby further improving the reliability of the secondary battery.

In any embodiment of the present application, a transverse tensile strength of the second base film is lower than a longitudinal tensile strength of the second base film; optionally, a ratio of the transverse tensile strength of the second base film to the longitudinal tensile strength of the second base film ranges from 0.4 to 0.95, and more optionally ranges from 0.6 to 0.9, which can effectively improve the nail penetration performance of the separator and prevent metal dendrites from penetrating the separator and causing a short circuit, thereby further improving the reliability of the secondary battery.

In any embodiment of the present application, a transverse tensile strength of the first base film is lower than a longitudinal tensile strength of the first base film; a ratio of the transverse tensile strength of the first base film to the longitudinal tensile strength of the first base film ranges from 0.2 to 0.9, and optionally from 0.3 to 0.6, which can effectively improve the nail penetration performance of the separator and prevent metal dendrites from penetrating the separator and causing a short circuit, thereby further improving the reliability of the secondary battery.

In any embodiment of the present application, the transverse tensile strength of the first base film is lower than the transverse tensile strength of the second base film; and/or, the longitudinal tensile strength of the first base film is lower than the longitudinal tensile strength of the second base film.

When the transverse tensile strength of the first base film is lower than the transverse tensile strength of the second base film and the longitudinal tensile strength of the first base film is lower than the longitudinal tensile strength of the second base film, the nail penetration performance of the separator can be effectively improved and metal dendrites can be prevented from penetrating the separator and causing a short circuit, thereby further improving the reliability of the secondary battery.

In any embodiment of the present application, the separator satisfies at least one of the following conditions (1) to (4):
(1) the transverse tensile strength of the first base film ranges from 100 Kgf/cm² to 1000 Kgf/cm², and optionally from 200 Kgf/cm² to 750 Kgf/cm²;
(2) the longitudinal tensile strength of the first base film ranges from 700 Kgf/cm² to 2500 Kgf/cm², and optionally from 1000 Kgf/cm² to 1900 Kgf/cm²;
(3) the transverse tensile strength of the second base film ranges from 1200 Kgf/cm² to 3800 Kgf/cm², and optionally from 2000 Kgf/cm² to 3500 Kgf/cm²; and
(4) the longitudinal tensile strength of the second base film ranges from 1800 Kgf/cm² to 5500 Kgf/cm², and optionally from 2100 Kgf/cm² to 3500 Kgf/cm².

When the separator is within the range given in at least one of the above conditions (1) to (4), the nail penetration performance of the separator can be effectively improved and metal dendrites can be prevented from penetrating the separator and causing a short circuit, thereby further improving the reliability of the secondary battery.

In any embodiment of the present application, the melting point of the first base film ranges from 160°C to 370°C, and optionally from 170°C to 350°C; and/or the melting point of the second base film ranges from 120°C to 280°C, and optionally from 130°C to 260°C. When the melting point of the first base film and the melting point of the second base film satisfy the above conditions, the separator has good heat resistance and physical properties, thereby improving the reliability of the secondary battery.

In any embodiment of the present application, an intermediate layer is further provided between the first base film and the second base film, the intermediate layer is arranged between the first base film and the second base film, and the intermediate layer includes a binder; optionally, the intermediate layer includes a binder and filler particles.

When an intermediate layer is provided between the first base film and the second base film, not only process defects of the base films during the hot-pressing compounding process can be compensated for, but also the stability of the physical properties of the separator can be further improved, thereby improving the reliability of the secondary battery.

In any embodiment of the present application, the binder includes one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin; and/or, the filler particles include at least one of inorganic particles, organic particles, and organic-metal framework materials. When an intermediate layer is provided between the first base film and the second base film, and the binder and/or filler particles in the intermediate layer include the above components, the reliability of the secondary battery can be improved.

In any embodiment of the present application, the separator satisfies at least one of the following conditions (1) to (6):
(1) a transverse elongation at break of the separator ranges from 50% to 220%, and optionally from 70% to 170%;
(2) a longitudinal elongation at break of the separator ranges from 30% to 150%, and optionally from 40% to 100%;
(3) a transverse tensile strength of the separator ranges from 1200 Kgf/cm² to 4000 Kgf/cm², and optionally from 2100 Kgf/cm² to 3600 Kgf/cm²;
(4) a longitudinal tensile strength of the separator ranges from 1900 Kgf/cm² to 5500 Kgf/cm², and optionally from 2200 Kgf/cm² to 3700 Kgf/cm²;
(5) a transverse heat shrinkage of the separator at 250°C for 1 h is ≤ 2%, optionally ≤1.0%; and
(6) a longitudinal heat shrinkage of the separator at 250°C for 1 h is ≤ 2%, optionally ≤1.0%.

When the separator is within the range given in at least one of the above conditions (1) to (6), the separator has good heat resistance and physical properties, thereby improving the reliability of the secondary battery.

A second aspect of the present application provides a secondary battery including the separator of any of the above solutions. When a secondary battery employs the given separator, the reliability of the secondary battery can be improved.

In any embodiment of the present application, the secondary battery further includes a positive electrode sheet and a negative electrode sheet, the separator is arranged between the positive electrode sheet and the negative electrode sheet, and the second base film faces the negative electrode sheet. When a secondary battery employs the given separator, the effect of resisting metal dendrite penetration can be augmented, and the dendrite precipitation of can be suppressed, thereby improving the reliability of the secondary battery.

A third aspect of the present application provides an electrical apparatus including a secondary battery of the second aspect of the present application. When a secondary battery of an electrical apparatus employs the given separator, the reliability of the electrical apparatus can be improved.

As the apparatus of the present application includes the secondary battery provided in the present application, it has at least the same advantages as the secondary battery.

### BRIEF DESCRIPTION OF DRAWINGS

In order to illustrate the technical solutions of the present application more clearly, the drawings used in the present application are briefly described below. Apparently, the drawings described below depict merely some embodiments of the present application. For those of ordinary skills in the art, other drawings may also be obtained based on these drawings without making any creative effort.
FIG. 1 is a schematic structural view of a separator according to an embodiment of the present application;
FIG. 2 is a schematic structural view of a separator according to another embodiment of the present application;
FIG. 3 is a schematic view of a secondary battery according to an embodiment;
FIG. 4 is an exploded view of the secondary battery in FIG. 3;
FIG. 5 is a schematic view of a battery module according to an embodiment;
FIG. 6 is a schematic view of a battery pack according to an embodiment;
FIG. 7 is an exploded view of the battery pack in FIG. 6; and
FIG. 8 is a schematic view of an apparatus with a secondary battery as a power source according to an embodiment.

### DETAILED DESCRIPTION

The present application is further described below in conjunction with specific embodiments. It should be understood that these specific embodiments are only used to illustrate the present application rather than limit the scope of the present application.

For the sake of brevity, only some numerical ranges are specifically disclosed herein. However, any lower limit can be combined with any upper limit to form a range not explicitly recited; and any lower limit can be combined with another lower limit to form a range not explicitly recited, and likewise, any upper limit can be combined with any other upper limit to form a range not explicitly recited. Further, each individually disclosed point or single numerical value itself may serve as a lower limit or upper limit in combination with any other point or single numerical value or with another lower limit or an upper limit to form a range not explicitly recited.

In the description herein, unless otherwise stated, the term "or" is inclusive. That is, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the description herein, it should be noted that, "above" and "below" are inclusive of the mentioned number itself, and the meaning of "more" in "one or more" is two and more, unless otherwise specified.

Unless otherwise specified, the terms used in the present application have the well-known meanings commonly understood by those skilled in the art. Unless otherwise specified, the numerical values of the parameters mentioned in the present application can be measured using various measurement methods commonly used in the art (for example, they can be tested according to the methods given in the embodiments of the present application).

### Secondary battery

A secondary battery refers to a battery that can be used continually by activating an active material in a charging manner, after the battery is discharged.

Generally, the secondary battery pack includes a positive electrode sheet, a negative electrode sheet, a separator and an electrolyte. During charging and discharging of the battery, active ions are intercalated and deintercalated back and forth between the positive electrode sheet and the negative electrode sheet. The separator is arranged between the positive electrode sheet and the negative electrode sheet and provides separation. The electrolyte serves to conduct ions between the positive electrode sheet and the negative electrode sheet.

### [Separator]

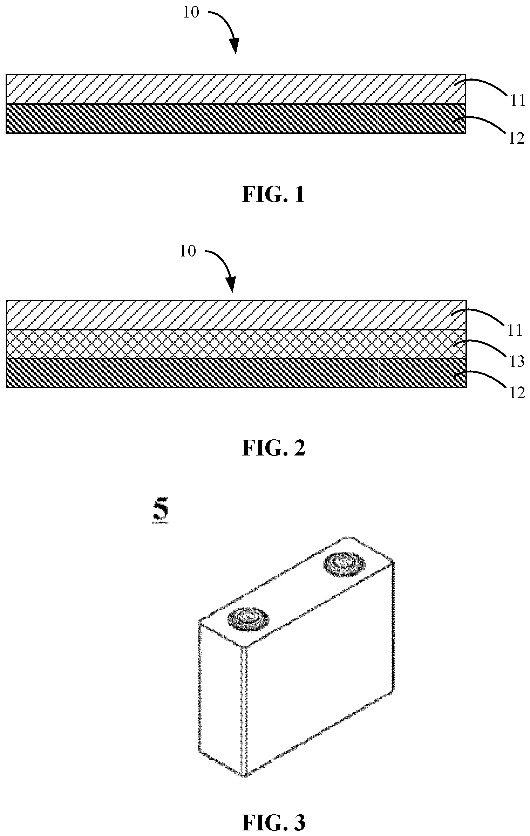

Referring to FIG. 1, an embodiment of the present application provides a separator 10 which includes a first base film 11 and a second base film 12, a melting point of the second base film 12 being lower than a melting point of the first base film 11. A transverse elongation at break of the second base film 12 is greater than a longitudinal elongation at break of the second base film 12, and the longitudinal elongation at break of the second base film 12 is less than 100%.

Without being bound to any theory, through a great amount of research, the inventors found that in the specific separator structure of the present application, the melting point of the first base film is higher than the melting point of the second base film, which can improve the heat resistance of the separator. By setting the transverse elongation at break of the second base film to be greater than the longitudinal elongation at break of the second base film, and the longitudinal elongation at break of the second base film to be less than 100%, the nail penetration performance of the separator can be effectively improved, and metal dendrites can be prevented from penetrating the separator and causing a short circuit, thereby improving the reliability of the secondary battery.

After further research, the inventors found that if the separator can optionally conform with one or more of the following designs, the performance of the battery can be further improved.

The materials of the first base film 11 and the second base film 12 are not particularly limited and any well-known base film having good chemical stability and strength stability may be selected. The materials of the first base film 11 and the second base film 12 of the separator 10 may be the same or different. In some embodiments, the first base film 11 and the second base film 12 may be selected from one or more of polyolefin, polyether, polyetheretherketone, polyethylene terephthalate, polyimide, polytetrafluoroethylene, polyvinylidene tetrafluoride, polyvinyl alcohol, glass fiber, non-woven fabric, polyolefin and polyvinylidene fluoride.

In any embodiment of the present application, a ratio of the transverse elongation at break of the second base film 12 to the longitudinal elongation at break of the second base film 12 ranges from 1.05 to 4.5, and optionally from 1.2 to 3.0, which can effectively improve the nail penetration performance of the separator and prevent metal dendrites from penetrating the separator and causing a short circuit, thereby improving the reliability of the secondary battery. For example, the ratio of the transverse elongation at break of the second base film 12 to the longitudinal elongation at break of the second base film 12 may be 1.05, 1.2, 1.5, 2.0, 2.15, 2.755, 3.0, 3.13, 3.5, 3.88, 4.0, 4.15, 4.25, 4.35, 4.5, etc., or in a range defined by any two of the above numerical values, for example, it may be in a range of 1.05-2.0, 1.2-3.0, 2.15-2.755, 3.0-3.5, 3.88-4.25, 4.35-4.5, etc.

In any embodiment of the present application, the longitudinal elongation at break of the second base film 12 ranges from 30% to 90%, which can effectively improve the nail penetration performance of the separator and prevent metal dendrites from penetrating the separator and causing a short circuit, thereby improving the reliability of the secondary battery. For example, the longitudinal elongation at break of the second base film 12 may be 30%, 35%, 38%, 40%, 43%, 50%, 60%, 68%, 70%, 75%, 78%, 80%, 85%, 90%, etc., or in a range defined by any two of the above numerical values, for example, it may be in a range of 30%-40%, 40%-60%, 68%-75%, 80%-90%, etc.

In any embodiment of the present application, the transverse elongation at break of the first base film 11 is less than the longitudinal elongation at break of the first base film 11, which can effectively improve the nail penetration performance of the separator and prevent metal dendrites from penetrating the separator and causing a short circuit, thereby improving the reliability of the secondary battery.

In any embodiment of the present application, a ratio of the transverse elongation at break of the first base film 11 to the longitudinal elongation at break of the first base film 11 ranges from 0.05 to 0.5, and optionally from 0.1 to 0.3, which can effectively improve the nail penetration performance of the separator and prevent metal dendrites from penetrating the separator and causing a short circuit, thereby improving the reliability of the secondary battery. For example, the ratio of the transverse elongation at break of the first base film 11 to the longitudinal elongation at break of the first base film 11 may be 0.05, 0.09, 0.1, 0.13, 0.15, 0.19, 0.2, 0.25, 0.28, 0.3, 0.34, 0.36, 0.4, 0.42, 0.45, 0.5, or in a range defined by any two of the above numerical values, for example, it may be in a range of 0.05-0.09, 0.1-0.15, 0.15-0.19, 0.1-0.3, 0.2-0.25, 0.28-0.34, 0.34-0.36, 0.4-0.42, 0.42-0.5, etc.

In any embodiment of the present application, the separator 10 satisfies at least one of the following conditions (1) to (3):
(1) the transverse elongation at break of the first base film 11 ranges from 30% to 250%, and optionally from 40% to 200%;
(2) the longitudinal elongation at break of the first base film 11 ranges from 40% to 1000%, and optionally from 400% to 800%; and
(3) the transverse elongation at break of the second base film 12 ranges from 50% to 250%, and optionally from 100% to 180%.

When the separator is within the range given in at least one of the above conditions (1) to (3), the nail penetration performance of the separator can be effectively improved and metal dendrites can be prevented from penetrating the separator and causing a short circuit, thereby improving the reliability of the secondary battery.

In any embodiment of the present application, the transverse tensile strength of the second base film 12 is lower than the longitudinal tensile strength of the second base film 12; optionally, a ratio of the transverse tensile strength of the second base film 12 to the longitudinal tensile strength of the second base film 12 ranges from 0.4 to 0.95, and more optionally from 0.6 to 0.9, which can effectively improve the nail penetration performance of the separator and prevent metal dendrites from penetrating the separator and causing a short circuit, thereby improving the reliability of the secondary battery. For example, the ratio of the transverse tensile strength of the second base film 12 to the longitudinal tensile strength of the second base film 12 may be 0.4, 0.5, 0.55, 0.6, 0.65, 0.7, 0.75, 0.8, 0.83, 0.85, 0.9, 0.95, or in a range defined by any two of the above numerical values, for example, it may be in a range of 0.4-0.5, 0.55-0.6, 0.6-0.9, 0.65-0.75, 0.75-0.8, 0.8-0.85, 0.85-0.9, 0.9-0.5, etc.

In any embodiment of the present application, the transverse tensile strength of the first base film 11 is lower than the longitudinal tensile strength of the first base film 11; a ratio of the transverse tensile strength of the first base film 11 to the longitudinal tensile strength of the first base film 11 ranges from 0.2 to 0.9, and optionally from 0.3 to 0.6, which can effectively improve the nail penetration performance of the separator and prevent metal dendrites from penetrating the separator and causing a short circuit, thereby improving the reliability of the secondary battery. For example, the ratio of the transverse tensile strength of the first base film 11 to the transverse tensile strength of the second base film 12 may be 0.2, 0.25, 0.28, 0.3, 0.35, 0.4, 0.5, 0.55, 0.6, 0.65, 0.7, 0.78, 0.8, 0.82, 0.85, 0.9, etc., or in a range defined by any two of the above numerical values, for example, it may be in a range of 0.2-0.25, 0.15-0.3, 0.25-0.4, 0.35-0.6, 0.3-0.6, 0.4-0.55, 0.55-0.7, 0.7-0.9, etc.

In any embodiment of the present application, the transverse tensile strength of the first base film 11 is lower than the transverse tensile strength of the second base film 12; and/or, the longitudinal tensile strength of the first base film 11 is lower than the longitudinal tensile strength of the second base film 12.

When the transverse tensile strength of the first base film is lower than the transverse tensile strength of the second base film; and/or the longitudinal tensile strength of the first base film is lower than the longitudinal tensile strength of the second base film, the nail penetration performance of the separator can be effectively improved and metal dendrites can be prevented from penetrating the separator and causing a short circuit, thereby improving the reliability of the secondary battery.

In any embodiment of the present application, the separator 10 satisfies at least one of the following conditions (1) to (4):
(1) the transverse tensile strength of the first base film 11 ranges from 100 Kgf/cm² to 1000 Kgf/cm², and optionally from 200 Kgf/cm² to 750 Kgf/cm²;
(2) the longitudinal tensile strength of the first base film 11 ranges from 700 Kgf/cm² to 2500 Kgf/cm², and optionally from 1000 Kgf/cm² to 1900 Kgf/cm²;
(3) the transverse tensile strength of the second base film 12 ranges from 1200 Kgf/cm² to 3800 Kgf/cm², and optionally from 2000 Kgf/cm² to 3500 Kgf/cm²; and
(4) the longitudinal tensile strength of the second base film 12 ranges from 1800 Kgf/cm² to 5500 Kgf/cm², and optionally from 2100 Kgf/cm² to 3500 Kgf/cm².

When the separator is within the range given in at least one of the above conditions (1) to (4), the nail penetration performance of the separator can be effectively improved and metal dendrites can be prevented from penetrating the separator and causing a short circuit, thereby improving the reliability of the secondary battery.

The transverse tensile strength, longitudinal tensile strength, transverse heat shrinkage and longitudinal heat shrinkage of the base film or the separator all have well-known meanings in the art and can be tested using equipment and methods known in the art. For example, the test may be performed with reference to the standard GB/T 36363-2018.

In any embodiment of the present application, the melting point of the first base film 11 ranges from 160°C to 370°C, and optionally from 170°C to 350°C. For example, the melting point may be 160°C, 165°C, 170°C, 180°C, 196°C, 200°C, 225°C, 235°C, 245°C, 260°C, 280°C, 290°C, 300°C, 315°C, 320°C, 330°C, 350°C, 370°C, or in a range defined by any two of the above numerical values, for example, it may be in a range of 160°C-170°C, 180°C-235°C, 225°C-280°C, 290°C-315°C, 350°C-370°C, etc. In some embodiments, the melting point of the second base film 12 ranges from 120°C to 280°C, and optionally from 130°C to 160°C. For example, the melting point may be 120°C, 130°C, 135°C, 140°C, 145°C, 150°C, 155°C, 160°C, 165°C, 180°C, 185°C, 190°C, 196°C, 200°C, 215°C, 220°C, 235°C, 240°C, 245°C, 250°C, 255°C, 260°C, 265°C, 270°C, 275°C, 280°C, or in a range defined by any two of the above numerical values, for example, it may be in a range of 120°C-185°C, 130°C-250°C, 245°C-255°C, 130°C-160°C, etc.

The melting points of the first base film and the second base film can be tested using equipment and methods known in the art. For example, the measurement can be carried out by differential scanning calorimetry. Specifically, the measurement can be carried out with reference to the standard GB/T 19466.3-2004. As an example, the measurement can be carried out as follows: take 4-6 mg of the sample to be tested, place it in the sample chamber of the differential scanning calorimeter, and raise the temperature from 25°C to 400°C at a heating rate of 10°C/min to obtain the melting endothermic curve of the sample, the temperature corresponding to the peak of the curve is the melting point of the sample.

The first base film 11 and the second base film 12 can be directly compounded by hot pressing. During the hot pressing compounding process, if the temperature is too high, it will lead to small porosity and poor air permeability; and if the temperature is too low, the first base film 11 and the second base film 12 will not be firmly bonded. Therefore, it is necessary to adjust to the appropriate hot pressing temperature. Optionally, the hot pressing temperature ranges from 20°C to 50°C. Referring to FIG. 2, in any embodiment of the present application, an intermediate layer 13 may be further provided between the first base film 11 and the second base film 1212, and the intermediate layer 13 includes a binder. Optionally, the intermediate layer includes a binder and filler particles; more optionally, the filler particles include at least one of inorganic particles, organic particles, and organic-metal framework materials.

Optionally, the inorganic particles include one or more of inorganic particles having a dielectric constant greater than 5, inorganic particles having ion conductivity but not storing ions, and inorganic particles capable of undergoing electrochemical reactions.

Optionally, the inorganic particles having a dielectric constant greater than 5 may include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, 0<m<1, 0<n<1), Pb(Mg₃Nb_{2/3})O₃-PbTiO₃ (abbreviated as PMN-PT), and their respective modified inorganic particles. Optionally, the inorganic particles may be modified by chemical modification and/or physical modification. The chemical modification methods include coupling agent modification (such as using silane coupling agent, titanate coupling agent, etc.), surfactant modification, polymer grafting modification, etc. The physical modification method may be mechanical dispersion, ultrasonic dispersion, high energy treatment, etc. The modification treatment can reduce the agglomeration of inorganic particles, thereby enabling the adhesive layer to have a more stable and uniform structure; in addition, by selecting coupling agents, surfactants or polymers with specific functional groups to modify the inorganic particles, the wetting and retention properties of the adhesive layer to the electrolyte solution can be improved and the adhesion of the adhesive layer to the first base film and the second base film can be improved.

Alternatively, the inorganic particles having ion conductivity but not storing ions may include at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6 <4, 0<y6<2, 0<x7<3, 0<y7<2, 0<z3<4, 0<x8<3, 0<y8<3, 0<z4<7. This can further improve the ion conductivity of the separator.

Optionally, the inorganic particles capable of undergoing an electrochemical reaction may include at least one of lithium-containing transition metal oxides, lithium-containing phosphates, carbon-based materials, silicon-based materials, tin-based materials, and lithium-titanium compounds.

Optionally, the organic particles may include one or more of polycarbonate, polythiophene, polypyridine, polystyrene, polyacrylic wax, polyethylene, polypropylene, cellulose, cellulose modifiers (e.g., carboxymethyl cellulose), melamine resins, phenolic resins, polyesters (e.g., polyethylene terephthalate, polyethylene naphthalate, polybutylene terephthalate), organosilicon resins, polyimide, polyamideimide, polyaramid, polyphenylene sulfide, polysulfone, polyethersulfone, polyetheretherketone, polyaryletherketone, copolymers of butyl acrylate and ethyl methacrylate (e.g., cross-linked polymers of butyl acrylate and ethyl methacrylate).

Optionally, the organic-metal framework material may include one or more of a nitrogen-containing heterocyclic ligand building structure, an organic carboxylic acid ligand building structure, and a nitrogen-oxygen mixed ligand building structure.

In some embodiments, the content of the binder may be greater than or equal to 10%, and optionally ranging from 10% to 30%, based on the total weight of the adhesive layer.

In some embodiments, the content of the filler may be less than or equal to 90%, and optionally ranging from 40% to 90%, 60% to 80%, based on the total weight of the adhesive layer.

In some embodiments, the intermediate layer may further include a dispersant, such as carboxymethyl cellulose, so as to adjust the viscosity of the intermediate layer slurry and improve the quality and uniformity of the intermediate layer.

In some embodiments, the content of the dispersant may be less than or equal to 25%, optionally less than or equal to 20%, based on the total weight of the adhesive layer.

When an intermediate layer is provided between the first base film and the second base film, not only process defects of the base films during the hot-pressing compounding process can be compensated for, but also the stability of the physical properties of the separator can be further improved, thereby improving the reliability of the secondary battery.

In any embodiment of the present application, the binder includes one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin. When an intermediate layer is provided between the first base film and the second base film, and the binder in the intermediate layer includes the above components, the reliability of the secondary battery can be improved. In some embodiments, carboxymethyl cellulose may be used as a thickener to adjust the viscosity of the slurry.

In any embodiment of the present application, the separator satisfies at least one of the following conditions (1) to (6):
(1) a transverse elongation at break of the separator 10 ranges from 50% to 220%, and optionally from 70% to 170%;
(2) a longitudinal elongation at break of the separator 10 ranges from 30% to 150%, and optionally from 40% to 100%;
(3) a transverse tensile strength of the separator 10 ranges from 1200 Kgf/cm² to 4000 Kgf/cm², and optionally from 2100 Kgf/cm² to 3600 Kgf/cm²;
(4) a longitudinal tensile strength of the separator 10 ranges from 1900 Kgf/cm² to 5500 Kgf/cm², and optionally from 2200 Kgf/cm² to 3700 Kgf/cm²;
(5) a transverse heat shrinkage of the separator 10 at 250°C for 1 h is ≤ 2%, and optionally ≤1.0%;and
(6) a longitudinal heat shrinkage of the separator 10 at 250°C for 1 h is ≤ 2%, and optionally ≤1.0%.

When the separator is within the range given in at least one of the above conditions (1) to (6), the separator has good heat resistance and physical properties, thereby improving the reliability of the secondary battery.

Unless otherwise specified, all raw materials used in the separator (e.g., the first base film, the second base film, the binder, the filler, etc.) are commercially available.

The present application provides a secondary battery, including the separator 10 of any one of the above solutions. When the secondary battery employs the given separator, the reliability of the secondary battery can be improved.

### [Positive electrode sheet]

In the secondary battery, the positive electrode sheet generally includes a positive electrode current collector and a positive electrode film layer provided on the positive electrode current collector. The positive electrode film layer includes a positive electrode active material.

The positive electrode current collector may be a conventional metal foil or a composite current collector (a metal material may be provided on a high molecular substrate to form a composite current collector). As an example, the positive electrode current collector may be an aluminum foil.

The specific type of the positive electrode active material is not limited, and an active material that can be used for the positive electrode of the secondary battery as known in the art can be used and can be selected by those skilled in the art according to actual requirements.

As an example, the positive electrode active material may include, but are not limited to, one or more of a lithium transition metal oxide, a lithium-comprising phosphate of olivine structure, and a respective modified compound thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the lithium-comprising phosphate of olivine structure may include, but are not limited to, one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon, and modified compounds thereof. These materials are all commercially available.

The modified compounds of the aforementioned materials may be produced by modification through doping and/or surface coating of the materials.

Generally, more optionally, the positive electrode film layer comprises a binder, a conductive agent and another optional auxiliary.

As an example, the conductive agent may be one or more of superconducting carbon, acetylene black, carbon black, Ketjen black, carbon dots, carbon nanotubes, conductive carbon black (Super P, SP), graphene, and carbon nanofiber.

As an example, the binder may be one or more of Polymerized Styrene Butadiene Rubber (SBR), water-basedacrylicresin, Polyvinylidene Difluoride (PVDF), Polytetrafluoroethylene (PTFE), Ethylene-vinyl Acetate Copolymer (EVA), Polyacrylic Acid (PAA), Carboxymethyl Cellulose (CMC), Polyvinyl Alcohol (Vinylalcohol Polymer, PVA), and Polyvinyl Butyral (PVB).

### [Negative electrode sheet]

In the secondary battery, the negative electrode sheet typically includes a negative electrode current collector and a negative electrode film layer provided on the negative electrode current collector. The negative electrode film layer includes a negative electrode active material.

The negative electrode current collector may be a conventional metal foil or a composite current collector (e.g., a metal material may be provided on a high molecular substrate to form a composite current collector). As an example, the negative electrode current collector may be a copper foil.

The specific type of the negative electrode active material is not limited, and an active material that can be used for the negative electrode of the secondary battery as known in the art can be used and can be selected by those skilled in the art according to actual requirements. As an example, the negative electrode active material may include, but are not limited to, one or more of artificial graphite, natural graphite, hard carbon, soft carbon, a silicon-based material and a tin-based material. The silicon-based material may be selected from one or more of elemental silicon, a silicon oxide compound (e.g., silicon monoxide), a silicon-carbon composite, a silicon-nitrogen composite and a silicon alloy. The tin-based material may be selected from one or more of elemental tin, a tin oxygen compound and a tin alloy. These materials are all commercially available.

In some embodiments, to further improve the energy density of the battery, the negative electrode active material may include a silicon-based material.

The negative electrode film layer typically comprises optionally a binder, a conductive agent and other optional auxiliaries.

As an example, the conductive agent may be one or more of superconducting carbon, acetylene black, carbon black, Ketjen black, carbon dot, carbon nanotube, graphene, and carbon nanofiber.

As an example, the binder may be one or more of polymerized styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional auxiliaries may be thickeners and dispersers (e.g., Carboxymethylcellulose Sodium, CMC-Na) and PTC thermistor materials.

### [Electrolyte solution]

The secondary battery may include an electrolyte solution, which serves to conduct ions between the positive electrode and the negative electrode. The electrolyte solution may include an electrolyte salt and a solvent.

As an example, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO2F₂), lithium difluoro bis(oxalato)phosphate (LiDFOP) and lithium tetrafluoro(oxalato)phosphate (LiTFOP).

As an example, the solvent may be selected from one or more of Ethylene Carbonate (EC), Propylene Carbonate (PC), Methyl Ethyl Carbonate (EMC), Diethyl Carbonate (DEC), Dimethyl Darbonate (DMC), Dipropyl Carbonate (DPC), Methyl Propyl Carbonate (MPC), Diisopropyl Carbonate (EPC), Butylene Carbonate (BC), Fluoroethylene Carbonate (FEC), Methyl Formate (MF), Methyl Acetate (MA), Ethyl Acetate (EA), n-Propyl Acetate (PA), Methyl Propionate (MP), Ethyl Propanoate (EP), n-Propyl Propionate (PP), Methyl Butyrate (MB), Ethyl Butyrate (EB), 1,4-Butyrolactone (GBL), Tetramethylene Sulfone (SF), Methyl Sulfone (MSM), Methyl Ethyl Sulfone (EMS) and Diethyl Sulfone (ESE).

In some embodiments, the electrolyte solution may also include additives. For example, the additives may include a negative electrode film-forming additive, or may include a positive electrode film-forming additive, and may further include an additive capable of improving certain performances of the battery, such as an additive for improving the overcharging performance of the battery, an additive for improving the high temperature performance of the battery, and an additive for improving the low temperature performance of the battery.

In some embodiments, the secondary battery may be a lithium-ion secondary battery. In any embodiment of the present application, the separator 10 is arranged between the positive electrode sheet and the negative electrode sheet, and the second base film 12 faces the negative electrode sheet.

Among them, the base film with low tensile strength has good heat resistance. Therefore, the first base film with low longitudinal tensile strength exerts its excellent heat resistance and faces the positive electrode to improve heat resistance. The base film with high longitudinal tensile strength has good physical properties and is not easily penetrated by metal dendrites. Therefore, the second base film with high longitudinal tensile strength exerts its excellent physical properties and faces the negative electrode to inhibit dendrite precipitation. Placing the first base film with good heat resistance toward the positive electrode and the second base film with good physical properties toward the negative electrode can increase the effect of resisting metal dendrite penetration, thereby improving the reliability of the secondary battery.

The embodiments of the present application have no particular limitation on the shape of the secondary battery, which may be cylindrical, square or any other shape. For example, FIG. 3 shows a secondary battery 5 with a square structure as an example.

In some embodiments, the secondary battery may include an outer package. This outer package is used to encapsulate the positive electrode sheet, the negative electrode sheet and the electrolyte. The first base film 11 of the separator 10 faces the positive electrode sheet.

In some embodiments, the outer package of the secondary battery may be a hard case, such as a hard plastic case, an aluminum case, and a steel case. The outer package of the secondary battery may also be a soft pack, such as a bag-type soft pack. The material of the soft pack may be a plastic, including such as one or more of Polypropylene (PP), Polybutylene Terephthalate (PBT), and Polybutylene Succinate (PBS).

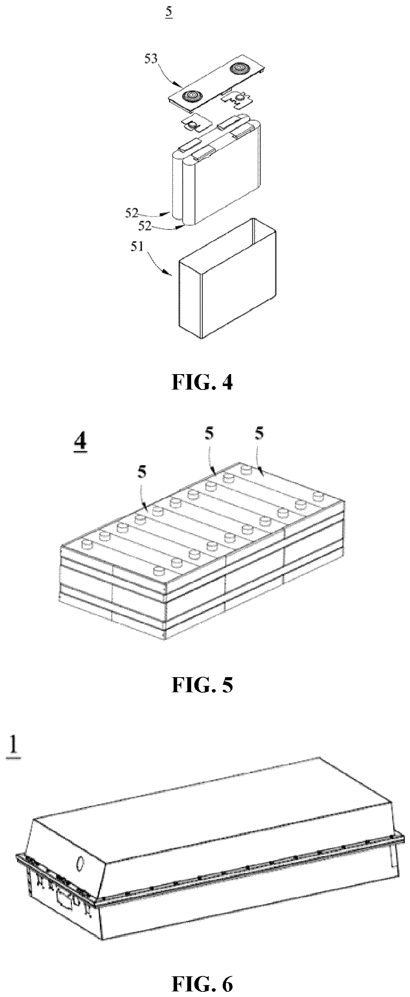

In some embodiments, referring to FIG. 4, the outer package may include a case 51 and a cover plate 53. The case 51 may include a bottom plate and a side plate connected to the bottom plate, which enclose to form an accommodating cavity. The case 51 has an opening in communication with the accommodating cavity, and the cover plate 53 can cover the opening to close the accommodating cavity.

The preparation method for the secondary battery according to the present application is well known. In some embodiments, the positive electrode sheet, the separator 10, the negative electrode sheet and the electrolyte solution may be assembled to form a secondary battery. As an example, the positive electrode sheet, the separator 10 and the negative electrode sheet may be wound and/or laminated to form an electrode assembly, and the electrode assembly may be placed in an outer package, dried, injected with an electrolyte solution, and subjected to vacuum packaging, standing, formation, shaping and other procedures to obtain a battery cell. A plurality of battery cells may be further connected in series, in parallel or in parallel-series connection to form a battery module. A plurality of battery modules may be further connected in series, in parallel or in parallel-series connection to form a battery pack. In some embodiments, a plurality of battery cells may alternatively directly form a battery pack.

FIG. 5 shows a battery module 4 as an example. Referring to FIG. 5, in the battery module 4, a plurality of secondary batteries 5 may be sequentially arranged along the length direction of the battery module 4. Of course, any other arrangement is also possible. The plurality of secondary batteries 5 may further be fixed by fasteners.

The battery module 4 may further include a shell having an accommodating space, in which the plurality of secondary batteries 5 are accommodated.

In some embodiments, the above-mentioned battery modules may further be assembled into a battery pack, and the number of battery modules contained in the battery pack may be adjusted according to the application and capacity of the battery pack.

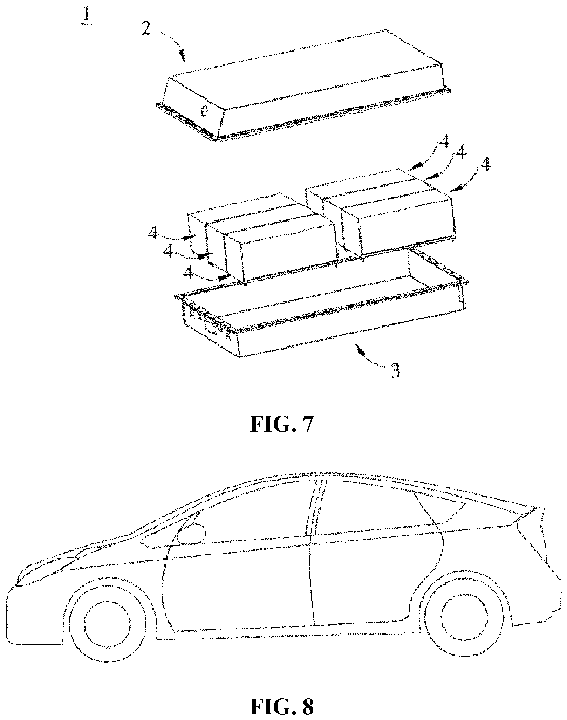

FIGS. 6 and 7 show a battery pack 1 as an example. Referring to FIGS. 6 and 7, the battery pack 1 may include a battery box and a plurality of battery modules 4 provided in the battery box. The battery box includes an upper box body 2 and a lower box body 3, where the upper box body 2 can cover the lower box body 3 to form an enclosed space for accommodating the battery modules 4. The plurality of battery modules 4 may be arranged in the battery box in any manner.

### [Apparatus]

The present application further provides an electrical apparatus, including the secondary battery of the present application. The battery cell, battery module, or battery pack can be used as a power source of the apparatus, or as an energy storage unit of the apparatus. The apparatus may be, but is not limited to, mobile devices (e.g., a mobile phone, or a laptop), electric vehicles (e.g., an all-electric vehicle, a hybrid electric vehicle, a plug-in hybrid electric vehicle, an electric bicycle, an electric scooter, an electric golf cart, or an electric truck), electric trains, ships and satellites, or energy storage systems.

The battery cell, battery module or battery pack can be selected for the apparatus according to the use requirements thereof.

FIG. 8 shows an electrical apparatus as an example. The electrical apparatus may be an all-electric vehicle, a hybrid electric vehicle, or a plug-in hybrid electric vehicle. In order to meet the requirements of the electrical apparatus for high power and high energy density of a secondary battery, a battery pack or a battery module may be used.

As another example, the electrical apparatus may be a mobile phone, a tablet, or a laptop. This electrical apparatus is generally required to be thin and light, and may use a battery cell as a power source.

The beneficial effects of the present application are further illustrated below in conjunction with the embodiments.

In order to make the technical problems to be solved, the technical solutions and the beneficial effects of the embodiments of the present application clearer, further detailed description will be made hereinafter in conjunction with the embodiments and drawings. Obviously, the described embodiments are only some of the embodiments of the present application, rather than all the embodiments. The following description of at least one exemplary embodiment is merely illustrative in nature and is in no way intended to limit the present application or application thereof. Based on the embodiments of the present application, all other embodiments derived by a person of ordinary skill in the art without any creative effort shall all fall within the protection scope of the present application.

### I. Preparation of separator

### Separator 1:

(1) A first base film and a second base film were provided.

The first base film meets the following requirements: the material is polypropylene (PP), the melting point is 165°C, the transverse elongation at break is 40%, the longitudinal elongation at break is 400%, the transverse tensile strength T1 is 400 Kgf/cm², and the longitudinal tensile strength L1 is 900 Kgf/cm².

The second base film meets the following requirements: the material is Polyethylene (PE), the melting point is 135°C, the transverse elongation at break is 105%, the longitudinal elongation at break is 50%, the transverse tensile strength T2 is 1400 Kgf/cm², and the longitudinal tensile strength L2 is 1700 Kgf/cm².

Among them, the ratio T1/T2 of the transverse tensile strength T1 of the first base film to the transverse tensile strength T2 of the second base film is 0.29, and the ratio L1/L2 of the longitudinal tensile strength L1 of the first base film to the longitudinal tensile strength L2 of the second base film is 0.53.

(2) Preparation of intermediate layer slurry: The binder polyacrylate and the fillers alumina particles and carboxymethyl cellulose were mixed evenly in a proper amount of solvent of deionized water in a ratio of 1:4:1 to prepare an intermediate layer slurry.

(3) The intermediate layer slurry of step (2) was coated over one side of the second base film of step (1) to form an intermediate layer.

(4) The first base film and the second base film coated in step (3) were compounded by hot pressing to obtain a separator, where the intermediate layer was between the first base film and the second base film.

The preparation methods of separators 2 to 13 are similar to that of the separator 1, except that one or more of the melting point, material, transverse elongation at break, longitudinal elongation at break, transverse tensile strength or longitudinal tensile strength of the base films are adjusted, as shown in Table 1 for details. The other preparation methods are all consistent with the preparation method of the separator in Example 1.

The separator 1 prepared by the above method was subjected to relevant performance tests, and the specific results are shown in detail in Table 1.

### II. Preparation of battery

### Example 1

### 1. Preparation of positive electrode sheet

The positive electrode active material of LiNi_{0.8}Co_{0.1}Mn_{0.1}O₂ (NCM811), the conductive agent of carbon black (SuperP) and the binder of polyvinylidene fluoride (PVDF) were mixed evenly in a suitable amount of solvent of N-Methylpyrrolidone (NMP) in a mass ratio of 96.2:2.7:1.1 to obtain a positive electrode slurry; the positive electrode slurry was coated over an aluminum foil as the positive electrode current collector, and then subjected to oven drying, cold pressing, slitting and cutting procedures to obtain a positive electrode sheet.

### 2. Preparation of negative electrode sheet

The negative electrode active material of artificial graphite, the conductive agent of carbon black (SuperP), the binder of polymerized styrene butadiene rubber (SBR), and carboxymethyl cellulose sodium (CMC-Na) were mixed evenly in a suitable amount of solvent of deionized water in a mass ratio of 96.4:0.7:1.8:1.1 to obtain a negative electrode slurry; the negative electrode slurry was coated over a copper foil as the negative electrode current collector, and then subjected to oven drying, cold pressing, slitting and cutting procedures to obtain a negative electrode sheet.

### 3. Separator

The separator 1 prepared as described above was employed as the separator.

### 4. Preparation of electrolyte solution

Ethylene carbonate (EC) and ethyl methyl carbonate (EMC) were mixed at a mass ratio of 30:70 to obtain an organic solvent, and fully dried electrolyte salt LiPF₆ was dissolved in the mixed solvent, the concentration of the electrolyte salt was 1.0 mol/L, and they were mixed evenly to obtain an electrolyte solution.

### 5. Preparation of secondary battery

The positive electrode sheet, the separator and the negative electrode sheet were stacked in sequence, so that the separator was positioned between the positive electrode sheet and the negative electrode sheet to provide separation, and were then wound to obtain an electrode assembly; the electrode assembly was placed in an outer package, the electrolyte solution prepared as described above was injected into the dried secondary battery, and subjected to vacuum packaging, standing, formation, and shaping procedures to obtain a secondary battery.

The preparation methods of the secondary batteries of Examples 2-11 and Comparative Examples 1-2 are similar to that of the secondary battery of Example 1, except that different separators are used (Examples 1-11 use separators 1-11, and Comparative Examples 1-2 use separators 12-13), as shown in Table 1 for details.

### III. Battery performance test

### 1. Transverse heat shrinkage test at 250°C

Sample preparation: The separator prepared as described above was punched into samples with a width of 50 mm and a length of 100 mm using a punching machine. Five parallel samples were placed on A4 paper and fixed. The A4 paper containing the samples was then placed on corrugated paper with a thickness ranging from 1 mm to 5 mm.

Sample test: The A4 paper on the corrugated paper was placed into a blast oven, the temperature of the blast oven was set to 250°C, and timing started after the temperature reached the set temperature and stabilized for 30 minutes. After the set time (1 hour in the present application) was reached, the width of the separator was measured and the numerical value was marked as a.

Calculation of thermal shrink: With the transverse (TD) thermal shrinkage = [(50-a)/50] × 100%, the average value of 5 parallel samples was taken as the test result.

### 2. Nail penetration performance

Test was performed at 25°C and an SOC condition of 100% of the battery. The thermal insulation pad/punctured cell/insulation pad/cell to be tested/thermal insulation pad were placed in sequence and connected to a high-temperature-resistant temperature-sensitive line. Water circulation was started in advance. When the temperature of the large surface of the cell stabilized at 25°C, circulation was continued for more than 10 minutes. A φ3 mm high-temperature-resistant steel needle, facing directly the center of the heat source, penetrates at a speed of 0.01mm/s until the punctured cell fails and burns. Changes in the voltage and other values of the cell to be tested were monitored. If the failure stops (when the instrument shows that the voltage fluctuates or drops sharply), the time length was recorded. If there was no change in the voltage and other values, it means the battery has passed the test. The punctured cell refers to a cell that has been punctured and used as a heat source.

**Table 1: Test results of battery performance of examples and comparative examples**

| Serial number | | | Example 1 | Example 2 | Example 3 | Example 4 | Example 5 | Example 6 | Example 7 | Example 8 | Example 9 | Example 10 | Example 11 | Comparat ive exam ple 1 | Comparat ive exam ple 2 |
|---|---|---|---|---|---|---|---|---|---|---|---|---|---|---|---|
| | First base film | Melting point | 165 | 165 | 165 | 165 | 165 | 165 | 165 | 165 | 165 | 327 | 270 | 165 | 165 |
| | | Material | PP | PP | PP | PP | PP | PP | PP | PP | PP | PTFE | PET | PP | PP |
| | | Transverse elongation at break (%) | 40 | 60 | 80 | 80 | 120 | 120 | 120 | 150 | 130 | 200 | 180 | 30 | 80 |
| | | Longitudinal elongati on at break (%) | 400 | 440 | 480 | 480 | 480 | 480 | 500 | 500 | 500 | 800 | 700 | 260 | 480 |
| | | Transverse tensile stre ngth T1 (Kgf/cm²) | 400 | 550 | 650 | 650 | 650 | 650 | 650 | 900 | 750 | 500 | 600 | 200 | 650 |
| | | Longitudinal tensile st rength L1 (Kgf/cm²) | 900 | 1100 | 1250 | 1250 | 1250 | 1250 | 1250 | 1500 | 1350 | 700 | 800 | 600 | 1250 |
| | Second ba se film | Melting point | 135 | 135 | 135 | 135 | 135 | 135 | 135 | 135 | 135 | 135 | 135 | 135 | 135 |
| | | Material | PE | PE | PE | PE | PE | PE | PE | PE | PE | PE | PE | PE | PE |
| | | Transverse elongation at break (%) | 105 | 105 | 105 | 105 | 140 | 140 | 160 | 180 | 180 | 180 | 180 | 80 | 100 |
| Separator structure | | Longitudinal elongati on at break (%) | 50 | 50 | 50 | 60 | 60 | 60 | 80 | 80 | 80 | 80 | 80 | 80 | 110 |
| | | Transverse tensile stre ngth T2 (Kgf/cm²) | 1400 | 1400 | 1600 | 1550 | 1500 | 1400 | 1100 | 1400 | 1400 | 1200 | 1200 | 1400 | 300 |
| | | Longitudinal tensile st rength L2 (Kgf/cm²) | 1700 | 1700 | 2000 | 1950 | 1900 | 1700 | 1500 | 1700 | 1700 | 1700 | 1700 | 1400 | 700 |
| | Ratio of transverse elongation to longitudinal elongation of the fir st base film | | 0.10 | 0.14 | 0.17 | 0.17 | 0.25 | 0.25 | 0.24 | 0.30 | 0.26 | 0.25 | 0.26 | 0.12 | 0.17 |
| | Ratio of transverse elongation to longitudinal elongation of the se cond base film | | 2.10 | 2.10 | 2.10 | 1.75 | 2.33 | 2.33 | 2.00 | 2.25 | 2.25 | 2.25 | 2.25 | 1.00 | 0.91 |
| | T1/L1 | | 0.44 | 0.50 | 0.52 | 0.52 | 0.52 | 0.52 | 0.52 | 0.60 | 0.56 | 0.71 | 0.75 | 0.33 | 0.52 |
| | T2/L2 | | 0.82 | 0.82 | 0.80 | 0.79 | 0.79 | 0.82 | 0.73 | 0.82 | 0.82 | 0.71 | 0.71 | 1.00 | 0.43 |
| | T1/T2 | | 0.29 | 0.40 | 0.41 | 0.42 | 0.43 | 0.46 | 0.59 | 0.64 | 0.70 | 0.42 | 0.50 | 0.14 | 2.17 |
| | L1/L2 | | 0.53 | 0.65 | 0.63 | 0.64 | 0.66 | 0.74 | 0.83 | 0.88 | 0.79 | 0.41 | 0.47 | 0.43 | 1.79 |
| Performa nce Test | Transverse heat shrinkage at 25 0°C (%) | | 2.3 | 1.9 | 1.1 | 1.2 | 1.5 | 1.8 | 1.6 | 1.4 | 1.8 | 0.8 | 0.9 | 5.5 | 4.5 |
| | Nail penetration test (min) | | 36 | 40 | 44 | 42 | 46 | 44 | 47 | 45 | 46 | 39 | 37 | 22 | 20 |

As can be seen from Table 1, in Examples 1-11, the melting point of the second base film is lower than the melting point of the first base film, and the transverse elongation at break of the second base film is greater than the longitudinal elongation at break of the second base film, and the longitudinal elongation at break of the second base film is less than 100%. The battery using the separator has enhanced nail penetration resistance and higher battery reliability.

In Comparative Examples 1-2, the transverse elongation at break of the second base film is less than or equal to the longitudinal elongation at break of the second base film, and the heat resistance and nail penetration performance are poor, which may easily cause safety problems of the battery.

While the above description merely provides specific embodiments of the present application, the scope of protection of the present application is not limited to the specific embodiments. Any person skilled in the art may easily conceive of various equivalent modifications or substitutions without departing from the technical scope disclosed in the present application. All these modifications or substitutions should be encompassed within the scope of protection of the present application. Therefore, the scope of protection of the present application shall be defined by the scope of protection of the claims.

## Claims

1. A separator, comprising:
a first base film; and
a second base film, a melting point of the second base film being lower than a melting point of the first base film;
a transverse elongation at break of the second base film being greater than a longitudinal elongation at break of the second base film, and the longitudinal elongation at break of the second base film being less than 100%.

2. The separator according to claim 1, wherein a ratio of the transverse elongation at break of the second base film to the longitudinal elongation at break of the second base film ranges from 1.05 to 4.5, and optionally from 1.2 to 3.0.

3. The separator according to claim 1 or 2, wherein the longitudinal elongation at break of the second base film ranges from 30% to 90%.

4. The separator according to any one of claims 1 to 3, wherein a transverse elongation at break of the first base film is less than a longitudinal elongation at break of the first base film.

5. The separator according to any one of claims 1 to 4, wherein a ratio of the transverse elongation at break of the first base film to the longitudinal elongation at break of the first base film ranges from 0.05 to 0.5, and optionally from 0.1 to 0.3.

6. The separator according to any one of claims 1 to 5, wherein the separator satisfies at least one of the following conditions (1) to (3):
(1) the transverse elongation at break of the first base film ranges from 30% to 250%, and optionally from 40% to 200%;
(2) the longitudinal elongation at break of the first base film ranges from 40% to 1000%, and optionally from 400% to 800%; and
(3) the transverse elongation at break of the second base film ranges from 50% to 250%, and optionally from 100% to 180%.

7. The separator according to any one of claims 1 to 6, wherein a transverse tensile strength of the second base film is lower than a longitudinal tensile strength of the second base film; and optionally, a ratio of the transverse tensile strength of the second base film to the longitudinal tensile strength of the second base film ranges from 0.4 to 0.95, and more optionally from 0.6 to 0.9.

8. The separator according to any one of claims 1 to 7, wherein a transverse tensile strength of the first base film is lower than a longitudinal tensile strength of the first base film; and a ratio of the transverse tensile strength of the first base film to the longitudinal tensile strength of the first base film ranges from 0.2 to 0.9, and optionally from 0.3 to 0.6.

9. The separator according to any one of claims 1 to 8, wherein the transverse tensile strength of the first base film is lower than the transverse tensile strength of the second base film; and/or,
the longitudinal tensile strength of the first base film is lower than the longitudinal tensile strength of the second base film.

10. The separator according to any one of claims 1 to 9, wherein the separator satisfies at least one of the following conditions (1) to (4):
(1) the transverse tensile strength of the first base film ranges from 100 Kgf/cm² to 1000 Kgf/cm², and optionally from 200 Kgf/cm² to 750 Kgf/cm²;
(2) the longitudinal tensile strength of the first base film ranges from 700 Kgf/cm² to 2500 Kgf/cm², and optionally from 1000 Kgf/cm² to 1900 Kgf/cm²;
(3) the transverse tensile strength of the second base film ranges from 1200 Kgf/cm² to 3800 Kgf/cm², and optionally from 2000 Kgf/cm² to 3500 Kgf/cm²; and
(4) the longitudinal tensile strength of the second base film ranges from 1800 Kgf/cm² to 5500 Kgf/cm2, and optionally from 2100 Kgf/cm² to 3500 Kgf/cm².

11. The separator according to any one of claims 1 to 10, wherein
the melting point of the first base film ranges from 160°C to 370°C, and optionally from 170°C to 350°C; and/or,
the melting point of the second base film ranges from 120°C to 280°C, and optionally from 130°C to 260°C.

12. The separator according to any one of claims 1 to 11, wherein the separator further comprises an intermediate layer, the intermediate layer is arranged between the first base film and the second base film, and the intermediate layer comprises a binder; optionally, the intermediate layer comprises a binder and filler particles.

13. The separator according to claim 12, wherein the binder comprises one or more of polyacrylate, polyacrylic acid, polytetrafluoroethylene, polyvinylidene fluoride, vinylidene fluoride-trichloroethylene copolymer, polyvinyl pyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, and cyanoethyl amylopectin; and/or,
the filler particles comprise at least one of inorganic particles, organic particles, and organic-metal framework materials.

14. The separator according to any one of claims 1 to 13, wherein the separator satisfies at least one of the following conditions (1) to (6):
(1) a transverse elongation at break of the separator ranges from 50% to 220%, and optionally from 70% to 170%;
(2) a longitudinal elongation at break of the separator ranges from 30% to 150%, and optionally from 40% to 100%;
(3) a transverse tensile strength of the separator ranges from 1200 Kgf/cm² to 4000 Kgf/cm², and optionally from 2100 Kgf/cm² to 3600 Kgf/cm²;
(4) a longitudinal tensile strength of the separator ranges from 1900 Kgf/cm² to 5500 Kgf/cm², and optionally from 2200 Kgf/cm² to 3700 Kgf/cm²;
(5) a transverse heat shrinkage of the separator at 250°C for 1 h is ≤ 2%, optionally ≤1.0%; and
(6) a longitudinal heat shrinkage of the separator at 250°C for 1 h is ≤ 2%, optionally ≤1.0%.

15. A secondary battery, comprising the separator according to any one of claims 1 to 14.

16. The secondary battery according to claim 15, wherein the secondary battery further comprises a positive electrode sheet and a negative electrode sheet, the separator is arranged between the positive electrode sheet and the negative electrode sheet, and the second base film faces the negative electrode sheet.

17. An electrical apparatus, comprising the secondary battery according to claim 15.
